# EUROPÄISCHE PATENTSCHRIFT

(11) **EP 0 924 679 B1**
(45) Veröffentlichungstag und Bekanntmachung des Hinweises auf die Patenterteilung: **30.06.2004**
(21) Anmeldenummer: 98121308.5
(22) Anmeldetag: 09.11.1998
(51) Int. Cl.: G09F 27/00, B64F 1/00, B62B 3/00

(54) **Werbeflächennutzungssytem für Flughafenanlagen**
System for using advertising surfaces for airports
Système d'utilisation de surface publicitaires pour aéroports

(30) Priorität: 18.12.1997 DE 29722340 U
(43) Veröffentlichungstag der Anmeldung: 23.06.1999
(73) Patentinhaber: EXPRESSO DEUTSCHLAND TRANSPORTGERÄTE GmbH, D-34123 Kassel (DE)
(72) Erfinder: Kratzenberg, Wofgang, 34270 Schauenburg (DE); Stein, Siegfried, 34246 Vellmar (DE)
(74) Vertreter: Schön, Theodor, Patent- und Zivilingenieur

(56) Entgegenhaltungen:
- DE-A- 3 932 550
- DE-A- 4 314 286
- US-A- 5 264 822
- US-A- 5 287 266

## Beschreibung

Die Erfindung bezieht sich auf ein Werbeflächennutzungssystem für Flughafenanlagen mit einer Vielzahl untereinander über Gänge und Wege verbundener Flugsteige, sog. Gates, und einer Anzahl mehr oder minder zentral angeordneter Abfertigungseinrichtungen sowie einer Ankunfts-und Abflughalle mit Ladengeschäften und Restaurants und dergl. Versorgungseinrichtungen und einer Wegweisung durch Informationstafeln sowie ferner einer Ausstattung mit schriftliche oder bildliche Werbebotschaften vermittelnden Informationsträgern, wobei den Fluggästen Schubgepäckwagen zur Beförderung ihres Gepäckes innerhalb der Flughafenanlage angeboten werden.

Mit zunehmender Nutzung des Flugzeuges als Reisetransportmittel und damit zunehmendem Flugverkehr werden notwendigerweise auch die Flughafenanlagen immer weitläufiger und damit auch für die Vermittlung von Werbebotschaften zunehmend interessanter. Die Flughafengesellschaften sind daher auch bemüht den verschiedensten Interessenten Werbeflächen anzubieten. Dabei sind aber selbst bei sehr weitläufigen Flughafenanlagen die als Werbeflächen vermietbaren Flächen begrenzt. Resultierend aus dieser Endlichkeit der als Werbeflächen in Betracht kommenden Flächen innerhalb einer Flughafenanlage besteht daher ein Bedürfnis nach einer möglichst intensiven Nutzung der als Werbeflächen vermietbaren Flächen innerhalb einer Flughafenanlage. Die herkömmliche Nutzung einer Werbefläche durch lediglich einen Interessenten bzw. Werbungstreibenden verhindert eine vermehrte oder mehrfache Vermietung und damit Nutzung einer gegebenen begrenzten Werbefläche.

Für Warenhäuser bzw. vergleichbare Verkaufsstätten ist es beispielsweise aus der US-PS 5 264 822 bekannt, die dort zur Verfügung gestellten, Schubgepäckwagen vergleichbaren Einkaufswagen mit einem zur Ausgabe einer Information geeigneten Display und die bestimmter Waren oder Verkaufsartikel enthaltenden Lagerstätten bzw. Regale mit einer Sender-/Empfängereinheit auszustatten, so daß es möglich ist den Kunden beim Passieren eines Regales auf dessen Inhalt aufmerksam zu machen, in dem auf dem Display des Einkaufswagens ein Hinweis auf die hier angebotene Ware zu erzeugt wird.

Eine vergleichbare, auf der Übermittlung von Angebotshinweisen durch stationäre Sender-/Empfängereinheiten an mobile Displays beruhende Einrichtung für Warenhäuser ist ferner aus der US-PS 5 287 266 bekannt

Der Erfindung liegt somit die Aufgabe zugrunde ein für Flughafenanlagen geeignetes Werbeflächennutzungssystem zu schaffen, weiches es gestattet eine oder auch eine Anzahl von Werbeflächen mehrfach zu nutzen bzw. mehrfach, d.h. an verschiedene Interessenten zu vermieten und dabei zugleich eine Preisgestaltung nach der wahrscheinlichen Häufigkeit der Vermittlung einer ausgewählten Werbebotschaft zu ermöglichen.

Diese Aufgabe wird erfindungsgemäß im Wesentlichen dadurch gelöst, daß über die Grundfläche der Flughafenanlage hin verteilt eine Vielzahl von Informations- und/oder Werbetafeln angeordnet ist, welche jeweils neben einer Standartanzeige wenigstens eine, vorzugsweise eine Anzahl unterschiedlicher Werbebotschaften gespeichert haben und welche willkürlich umschaltbar sind, derart, daß in beliebiger Reihenfolge wahlweise eine der gespeicherten Werbebotschaften gezeigt wird, wobei insbesondere vorgesehen ist, daß an den in der Flughafenanlage für die Fluggäste bereitgehaltenen Schubgepäckwagen codierte Signale ausgebende Mittel, insbesondere abfragbare Transponder, angeordnet sind, welche jeweils dem Einschalten einer bestimmten Werbebotschaft zugeordnet sind. In Ergänzung zu dieser Ausstattung der Schubgepäckwagen ist zudem vorgesehen, daß die Werbeflächen an Informationstafeln oder reinen Werbetafeln angeordnet sind, welche zumindest mit einer zur Abfrage codierter Daten von Transpondern geeigneten Einrichtung, insbesondere einer Sender-/Empfängeranlage, ausgestattet sind. Damit ist eine Installation einer nahezu beliebigen Vielzahl aktivierbarer Werbebotschaften in den einzelnen Werbetafeln möglich.
In Verbindung mit einer derartigen Ausrüstung der Flughafenanlage sieht die Erfindung weiter vor, daß den innerhalb der Grundfläche der Flughafenanlage überhaupt vorhandenen ein-und ausschaltbaren Werbeflächen eine in Abhängigkeit von einer wählbaren Größe und der Verteilung der Anzahl der Fluggäste steuerbare Einschaltzeit zugeordnet ist. Die wählbare Größe kann dabei eine Anzahl von Schubgepäckwagen sein, derart, daß ein Werbungtreibender eine beliebige Anzahl von Schubgepäckwagen zu einem bestimmten Preis mietet, welche dann jeweils mit einer Einrichtung zur Aktivierung einer bestimmten Werbebotschaft auf denjenigen ein-und ausschaltbaren Werbeflächen, an denen einer dieser Schubgepäckwagen vorbeikommt, ausgerüstet sind. Damit wird auf der einen Seite eine nahezu beliebige Mehrfachnutzung von Werbeflächen erreicht und kann auf der anderen Seite der Werbungtreibende durch Entrichtung des Mietpreises für eine Anzahl von Schubgepäckwagen selbst bestimmen zu welchem Preis, d.h. zu welcher Wahrscheinlichkeit einer Werbezeit er die angebotenen Werbeflächen benutzen will, wobei die Wahrscheinlichkeit der Ansteuerung einer Werbebotschaft mit der Anzahl der gemieteten Schubgepäckwagen steigt..

Für eine vorteilhafte Mehrfachnutzung derartiger Werbeflächen ist nach einer bevorzugten Verwirklichung der Erfindung dann ferner vorgesehen, daß jeder Werbebotschaft eine begrenzte Einschaltzeit zugeordnet ist und die Ein-oder Umschaltung der Werbebotschaften vermittels einer drahtlosen Fernsteuerung erfolgt, wobei die ein-und ausschaltbaren Werbebotschaften über mobile Senderanlagen aktivierbar sind. Dies kann im einfachsten Fall dadurch geschehen, daß die Schubgepäckwagen mit einem Signalgenerator, lediglich beispielsweise einem Magneten ausgestattet sind, welcher im Vorbeifahren an einer Werbefläche die Einschalteinrichtung für eine Werbebotschaft aktiviert. Derartige einfache Gestaltungsformen lassen jedoch lediglich eine ganz geringe Anzahl gegeneinander austauschbarer Werbebotschaften zu.

Eine optimale Nutzung der Werbeflächen ist zudem nur dann möglich wenn die auf eine einzelne Werbebotschaft bezogenen Anzeigezeiten begrenzt sind. Erfindungsgemäß ist ausgehend von einer automatischen zeitlichen Begrenzung der Anzeigezeiten für einzelne Werbebotschaften hierzu vorgesehen, daß den Sender-/Empfängeranlagen jeweils eine Zähleinrichtung nachgeschaltet ist, welche den Eingang von Aktivierungssignalen speichert, falls die Aktivierungsignale in rascherer Folge eingehen als sie ausgeführt werden können.

Um zu vermeiden, daß ein versehentlich innerhalb des Reichweitenbereiches einer Abfragestation stehen gebliebener Schubgepäckwagen eine Daueranzeige einer einzigen Werbebotschaft auslösen kann, sieht eine besondere Ausstattungsform des Werbeflächenverteilungssystemes vor, daß den Sender-/Empfängeranlagen zusätzlich zu einer Zähleinrichtung eine Zeittakteinrichtung nachgeschaltet ist, welche bei Erkennen eines statischen Aktivierungssignales für eine bestimmte Werbebotschaft deren Wiederholung auf vorgebbare Intervalle, beispielsweise ein Intervall von 30 Minuten, begrenzt.

Im Übrigen wird eine zweckmäßige Einrichtung darin gesehen, daß die Werbeflächen mit einer stehenden Werbebotschaft programmiert sind, welche selbsttätig einschaltet, falls kein Aktivierungssignal für eine auslösbare Werbebotschaft vorliegt.

In einer weiteren abgewandelten Verwirklichungsform eines Werbeflächenverteilungssystemes kann ferner vorgesehen sein, daß bei einem dezentral organisierten Werbeflächennutzungssystem die mobilen, an den Schubgepäckwagen angeordneten Sender-/Empfängereinheiten als aktive, mit einer eigenständigen Energieversorgung ausgestattete Einheiten ausgebildet sind und mit einer Sender-/Empfängereinheit zusammenwirken, wobei an allen Abzweigungen oder Kreuzungen von Wegen bzw. Gängen der Anlage angeordneten stationären Sender-/Empfängeranlagen jeweils eine Sende- und zwei im gegenseitigen Abstand und mit entgegengesetzter Ausrichtung montierte Empfangsantennen aufweisen und derart an der Raumdecke eines Ganges oder Weges montiert sind, daß jede der Emfangsantennen einer Bewegungsrichtung eines Schubgepäckwagens zugeordnet ist.

Im Rahmen der Erfindung kann anstelle einer auf Funkwellenbasis arbeitenden drahtlosen Ansteuerung der Anzeigetafeln für Werbebotschaften auch deren Ansteuerung unter Verwendung eines Systemes von Lichtsendern und Lichtempfängern vorgesehen sein.

Im Weiteren bietet sich im Rahmen einer wie auch immer gestalteten Verwirklichung einer Mehrfachnutzung von Werbeflächen in Flughafenanlagen mittels ansteuerbarer Umschalteinrichtungen für zeitlich begrenzt anzuzeigende Werbebotschaften auch der Einsatz von Schaltsignalen auslösenden Mitteln, z.B. Transpondern, an sonstigen von den Fluggästen mehr oder minder notwendigerweise mitzuführenden Gegenständen, im Extremfall am Flugticket an.

Die Erfindung ist in der nachfolgenden Beispielsbeschreibung anhand eines in der Zeichnung dargestellten Ausführungsbeispieles im Einzelnen beschrieben. In der Zeichnung zeigt die
- **Figur 1**: eine schematische Grundrißdarstellung einer Flughafenanlage;
- **Figur 2**: eine mehr oder minder schematische schaubildliche Darstellung der Anordnung einer eine Werbefläche tragenden Informationstafel und der ihr zugeordneten Sender-/Empfängereinheit;
- **Figur 3**: eine schematische Darstellung einer wagengebundenen Ansteuereinrichtung.
- **Figur 4**: eine schematische Darstellung der vertikalen Reichweite einer stationären Sender-/Empfängeranlage;
- **Figur 5**: eine schematische Darstellung der horizonalen Reichweite einer stationären Sender-/Empfängeranlage.

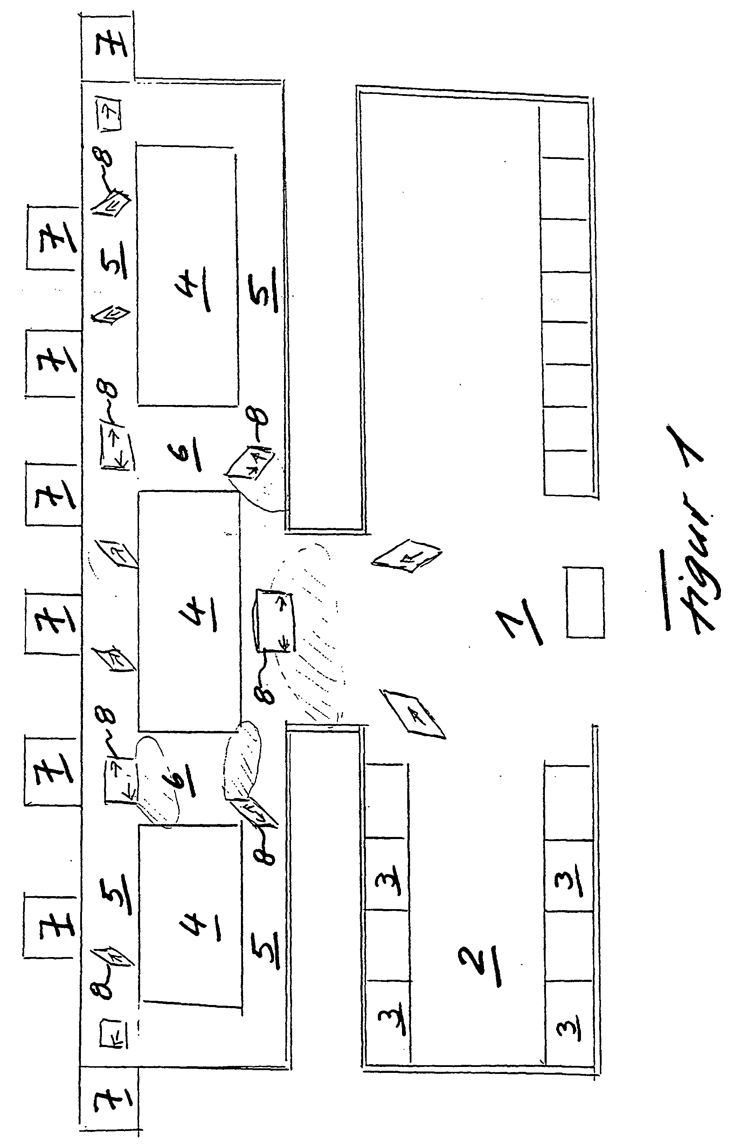

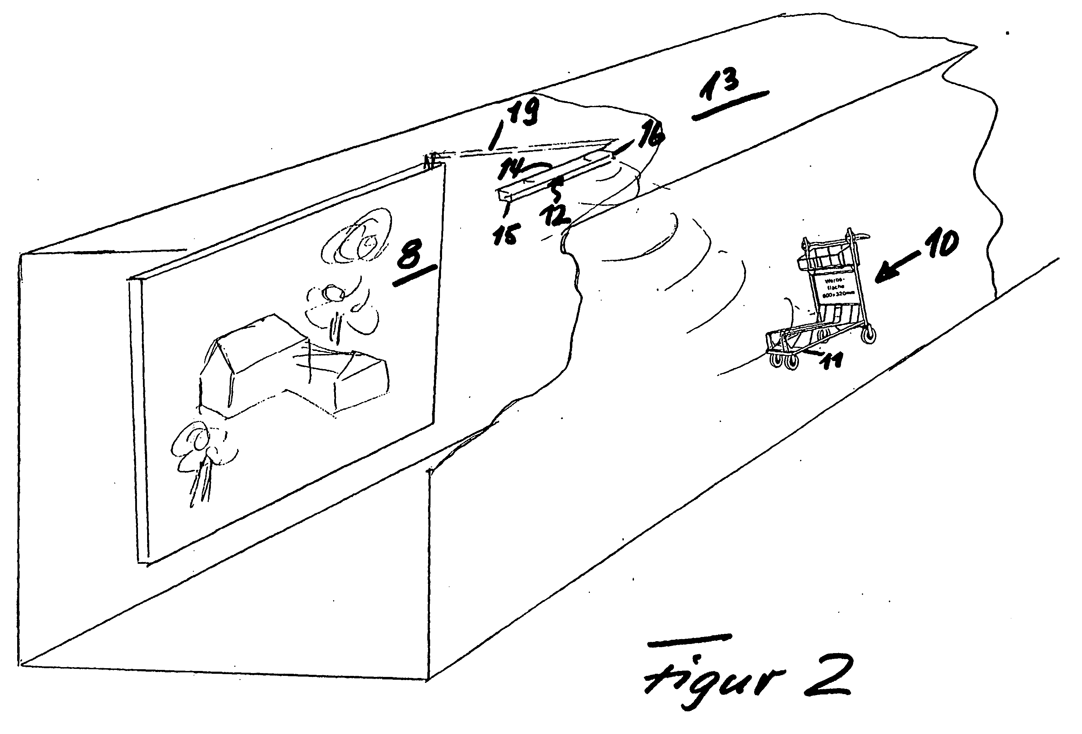

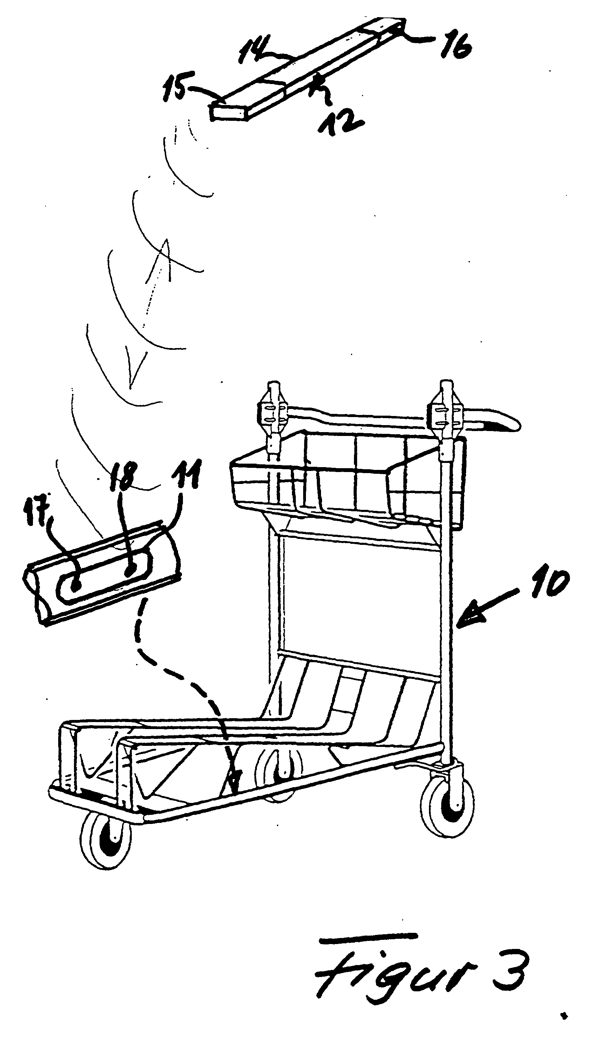

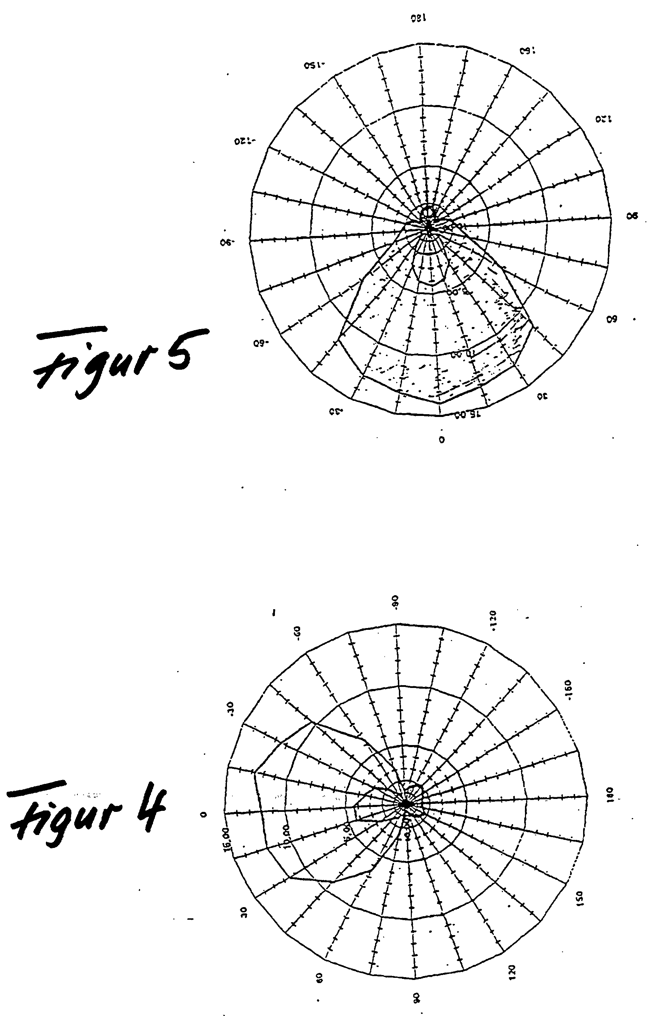

Die in der Figur 1 vereinfacht und schematisch angedeutete Flughafenanlage umfaßt beispielsweise einen Zentralbereich 1 in dessen Abflughalle 2 eine Vielzahl von Abfertigungsschaltern 3 untergebracht ist und in welcher sich ferner Ladengeschäfte und Restaurants 4 befinden. Die Flughafenanlage umfaßt ferner mit einer Vielzahl untereinander über Gänge 5 und Wege 6 verbundener und bezüglich des Zentralbereiches 1 peripher angeordneter Flugsteige 7, sog. Gates. Ausgehend von den Abfertigungsschaltern 3 bzw. ihrem Zentralbereich 1 sind über die Grundfläche der Flughafenanlage hin verteilt in allen Gängen 5 und Wegen 6 Werbeflächen angeordnet. Die Werbeflächen bestehen dabei aus Anzeigetafeln 8, welche jeweils neben einer Standartanzeige wenigstens eine, vorzugsweise eine Anzahl unterschiedlicher Werbebotschaften gespeichert haben und welche willkürlich umschaltbar sind, derart, daß in beliebiger Reihenfolge wahlweise eine der gespeicherten Werbebotschaften gezeigt wird.
Die Ein-oder Umschaltung der gespeicherten Werbebotschaften erfolgt in der gezeigten Ausführungsform vermittels einer drahtlosen Fernsteuerung, wobei an den in der Flughafenanlage für die Fluggäste bereitgehaltenen Schubgepäckwagen 10 als codierte Signale ausgebende Mittel abfragbare Transponder 11 angeordnet sind, welche jeweils lediglich ein einziges dem Einschalten einer bestimmten Werbebotschaft zugeordnetes Signal vermitteln können. Komplementär dieser Ausstattung der Schubgepäckwagen 10 sind die Werbeflächen an Informationstafeln oder reinen Werbetafeln angeordnet sind, welche zumindest mit einer zur Abfrage codierter Daten von Transpondern geeigneten Einrichtung, insbesondere einer Sender-/Empfängeranlage 12, ausgestattet sind. Die den einzelnen Informations-bzw. Anzeigetafeln 8 zugeordneten und mit diesen über Leitungen 19 verbundenen Sender-/Empfängeranlagen 12 sind, wie in der Figur 2 schematisch dargestellt, an der Gebäude-bzw. Raumdecke 13 angeordnet und haben, gemäß den Darstellungen nach Figur 4 und 5 jeweils einen begrenzten vertikalen und horizontalen Reichweitenbereich, derart, daß sich eine keulenförmige Reichweitenbegrenzung ergibt.
Wie insbesondere aus der Darstellung der Figur 3 erkennbar weisen die stationären Sender-/Empfängeranlagen 12 jeweils eine Sende- 14 und zwei im gegenseitigen Abstand und mit entgegengesetzter Ausrichtung montierte Empfangsantennen 15, 16 auf und sind und derart an der Raumdecke 13 eines Ganges 5 oder Weges 6 montiert sind, daß jede der Emfangsantennen 15 bzw. 16 einer Bewegungsrichtung eines Schubgepäckwagens 10 zugeordnet ist. Entsprechend ist der Transponder 11 mit zwei gerichteten Polen 17 und 18 versehen und in paralleler Ausrichtung zur Sender-/Empfängeranlage 12 parallel zur Wagenlängsachse ausgerichtet an dem Schubgepäckwagen 10 angeordnet.

## Patentansprüche

1. Werbeflächennutzungssystem für Flughafenanlagen mit einer Vielzahl untereinander über Gänge und Wege verbundener Flugsteige, sog. Gates, und einer Anzahl mehr oder minder zentral angeordneter Abfertigungseinrichtungen sowie einer Ankunfts-und Abflughalle mit Ladengeschäften und Restaurants und dergl. Versorgungseinrichtungen und einer Wegweisung durch Informationstafeln sowie ferner einer Ausstattung mit schriftliche oder bildliche Werbebotschaften vermittelnden Informationsträgern, wobei den Fluggästen Schubgepäckwagen zur Beförderung ihres Gepäckes innerhalb der Flughafenanlage angeboten werden,
**dadurch gekennzeichnet,**
**daß** über die Grundfläche der Flughafenanlage hin verteilt eine Vielzahl von Werbetafeln angeordnet ist, welche jeweils neben einer Standartanzeige wenigstens eine, vorzugsweise eine Anzahl unterschiedlicher Werbebotschaften gespeichert haben und welche willkürlich umschaltbar sind, derart, daß wahlweise eine der gespeicherten Werbebotschaften gezeigt wird, und daß an den in der Flughafenanlage für die Fluggäste bereitgehaltenen Schubgepäckwagen codierte Signale ausgebende Mittel, insbesondere abfragbare Transponder, angeordnet sind, welche jeweils dem Einschalten einer bestimmten Werbebotschaft zugeordnet sind.

2. Werbeflächennutzungssystem nach Anspruch 1, **dadurch gekennzeichnet, daß** den innerhalb der Grundfläche der Flughafenanlage überhaupt vorhandenen ein-und ausschaltbaren Werbeflächen eine in Abhängigkeit von einer wählbaren Größe und der Verteilung der Anzahl der Fluggäste steuerbare Einschaltzeit zugeordnet ist.

3. Werbeflächennutzungssystem nach Anspruch 1 und 2, **dadurch gekennzeichnet, daß** jeder Werbebotschaft eine begrenzte Einschaltzeit zugeordnet ist.

4. Werbeflächennutzungssystem nach Anspruch 1 bis 3, **dadurch gekennzeichnet, daß** die ein-und ausschaltbaren Werbebotschaften über mobile Senderanlagen aktivierbar sind.

5. Werbeflächennutzungssystem nach Anspruch 1 bis 4, **dadurch gekennzeichnet, daß** die Werbeflächen an Informationstafeln oder reinen Werbetafeln angeordnet sind, welche zumindest mit einer zur Abfrage codierter Daten von Transpondern geeigneten Einrichtung, insbesondere einer Sender-/Emfängeranlage, ausgestattet sind.

6. Werbeflächennutzungssystem nach Anspruch 1 bis 5, **dadurch gekennzeichnet, daß** den Sender-/Empfängeranlagen jeweils eine Zähleinrichtung nachgeschaltet ist, welche den Eingang von Aktivierungssignalen speichert, falls die Aktivierungsignale in rascherer Folge eingehen als sie ausgeführt werden können.

7. Werbeflächennutzungssystem nach Anspruch 1 bis 6, **dadurch gekennzeichnet, daß** den Sender-/Empfängeranlagen zusätzlich zu einer Zähleinrichtung eine Zeittakteinrichtung nachgeschaltet ist, welche bei Erkennen eines statischen Aktivierungssignales für eine bestimmte Werbebotschaft deren Wiederholung auf vorgebbare Intervalle begrenzt.

8. Werbeflächennutzungssystem nach Anspruch 1 bis 7, **dadurch gekennzeichnet, daß** die Werbeflächen mit einer stehenden Werbebotschaft programmiert sind, welche selbsttätig einschaltet, falls kein Aktivierungssignal für eine auslösbare Werbebotschaft vorliegt.

9. Werbeflächennutzungssystem nach Anspruch 1 bis 8, **dadurch gekennzeichnet, daß** die Umschaltung der Werbebotschaften vermittels einer drahtlosen Fernsteuerung erfolgt.

10. Werbeflächennutzungssystem nach einem der Ansprüche 1 bis 9, **dadurch gekennzeichnet, daß** bei einem zentral organisierten Werbeflächennutzungssystem die mobilen, an den Schubgepäckwagen angeordneten Sender-/Empfängereinheiten als aktive, mit einer eigenständigen Energieversorgung ausgestattete Einheiten ausgebildet sind und mit einer zentralen Sender-/Empfängereinheit zusammenwirken.

11. Werbeflächennutzungssystem nach einem der Ansprüche 1 bis 10, **dadurch gekennzeichnet, daß** die bei einem dezentral organisierten Werbeflächennutzungssystem an allen Abzweigungen oder Kreuzungen von Wegen bzw. Gängen der Anlage angeordneten stationären Sender-/Empfängereinheiten jeweils eine Sende- und zwei im gegenseitigen Abstand und mit entgegengesetzter Ausrichtung montierte Empfangsantennen aufweisen und derart an der Raumdecke eines Ganges oder Weges montiert sind, daß jede der Emfangsantennen einer Bewegungsrichtung eines Schubgepäckwagens zugeordnet ist.

## Claims

1. System for the use of advertising spaces for airport facilities with a large number of passenger ramps, so-called gates, connected to one another by gangways and corridors, and a number of more or less centrally arranged check-in systems and an arrival and departure lounge with shops and restaurants and similar supply outlets, and sign-posting by information boards and also equipment comprising information providers conveying written or pictorial advertising messages, wherein the air passengers are offered luggage trolleys to convey their luggage within the airport facility, **characterised in that** a large number of advertising panels is arranged, dispersed over the area of the airport facility, each panel having stored, in addition to a standard advertisement, at least one advertising message, preferably a number of different advertising messages, and it being possible to change the panels at will, such that any one of the stored messages may be selected and displayed, and **in that** means emitting coded signals, in particular transponders that can be scanned, each of which is associated with turning on a particular advertising message, are arranged on the luggage trolleys provided in the airport facility for the air passengers.

2. System for the use of advertising spaces according to claim 1, **characterised in that** a turn-on time, which can be controlled as a function of a selectable variable and the distribution of the number of air passengers, is associated with the turn-on/turn-off advertising spaces that are generally available within the floor space of the airport facility.

3. System for the use of advertising spaces according to claims 1 and 2, **characterised in that** a limited turn-on time is associated with each advertising message.

4. System for the use of advertising spaces according to claims 1 to 3, **characterised in that** the turn-on and turn-off advertising messages can be activated via transmitter units.

5. System for the use of advertising spaces according to claims 1 to 4, **characterised in that** the advertising spaces are arranged on information boards or boards purely for advertising, which are equipped with at least one device suitable for scanning coded data from transponders, in particular a transmitter/receiver unit.

6. System for the use of advertising spaces according to claims 1 to 5, **characterised in that** a counting device, which stores the input of activation signals if the activation signals are input at a faster rate than they can be implemented, is connected downstream to each transmitter/receiver unit.

7. System for the use of advertising spaces according to claims 1 to 6, **characterised in that**, in addition to a counting device, a timing device, which, upon identification of a static activation signal for a particular advertising message, limits repetition of the message to a determinable interval, is connected downstream from the transmitter/receiver units.

8. System for the use of advertising spaces according to claims 1 to 7, **characterised in that** the advertising spaces are programmed with a set advertising message, which is automatically turned on if there is no activation signal for an advertising message which can be triggered.

9. System for the use of advertising spaces according to claims 1 to 8, **characterised in that** the advertising messages are turned over by means of a wireless remote control.

10. System for the use of advertising spaces according to claims 1 to 9, **characterised in that** in a centrally organised system for the use of advertising spaces, the mobile transmitter/receiver units arranged on the luggage trolleys are formed as active units equipped with an independent energy supply and cooperate with a central transmitter/receiver unit.

11. System for the use of advertising spaces according to claims 1 to 10, **characterised in that** in a decentrally organised system for the use of advertising spaces, the stationary transmitter/receiver units arranged at all branch points or intersections of corridors or gangways of the facility each have one transmitting antenna and two receiving antennae assembled with mutual spacing and with opposed orientation, and are assembled on the ceiling of a gangway or corridor in such a way that each of the receiving antennae is associated with a movement direction of a luggage trolley.

## Revendications

1. Système d'utilisation de surfaces publicitaires dans des aérogares comprenant de multiples portes d'embarquement appelées « gates », reliées entre elles par des couloirs ou chemins, un certain nombre de zones d'enregistrement et de contrôle situées plus ou moins au centre, un hall de départ et d'arrivée avec des commerces, des restaurants et d'autres services, des panneaux d'informations ainsi que des supports pour des annonces publicitaires écrites ou figuratives, les passagers disposant de chariots de bagages pour transporter les bagages à l'intérieur de l'aérogare, **caractérisé en ce que** sur toute la surface de l'aérogare sont répartis de multiples panneaux publicitaires qui stockent, outre une annonce standard, au moins une, de préférence plusieurs annonces publicitaires différentes qui peuvent être changées à volonté de façon à présenter une des annonces stockées au choix et **que** les chariots à bagages mis à la disposition des passagers dans l'aérogare sont munis de moyens émettant des signaux codés, en particulier de transpondeurs interrogeables, associés à la présentation d'une annonce publicitaire donnée.

2. Système d'utilisation de surfaces publicitaires selon la revendication 1 **caractérisé en ce que** aux surfaces publicitaires existant à l'intérieur de l'aérogare qui peuvent être mises en et hors fonctionnement est affectée une durée de fonctionnement commandée en dépendance d'une grandeur déterminable au choix et de la répartition du nombre de passagers.

3. Système d'utilisation de surfaces publicitaires selon les revendications 1 et 2 **caractérisé en ce que** à chaque annonce publicitaire est affectée une durée de fonctionnement limitée.

4. Système d'utilisation de surfaces publicitaires selon les revendications 1 à 3 **caractérisé en ce que** les annonces publicitaires pouvant être mises en et hors fonctionnement sont activées par des unités émettrices mobiles.

5. Système d'utilisation de surfaces publicitaires selon les revendications 1 à 4 **caractérisé en ce que** les surfaces publicitaires sont agencées sur des panneaux d'information ou des panneaux destinés exclusivement à la publicité, qui sont équipés d'au moins un dispositif adapté à l'interrogation de données codées de transpondeurs, en particulier d'une unité émettrice/réceptrice.

6. Système d'utilisation de surfaces publicitaires selon les revendications 1 à 5 **caractérisé en ce que** à la suite de chaque unité émettrice/réceptrice est disposé un compteur stockant les signaux d'activation qui arrivent, au cas où les signaux d'activation arrivent à une cadence plus élevée que la cadence possible d'émission des signaux.

7. Système d'utilisation de surfaces publicitaires selon les revendications 1 à 6 **caractérisé en ce que** à la suite de chaque compteur disposé lui-même à la suite des unités émettrices/réceptrices est prévu un dispositif de cadencement qui, après reconnaissance d'un signal statique d'activation d'une annonce publicitaire déterminée, limite la répétition de ladite annonce publicitaire à des intervalles déterminables à l'avance.

8. Système d'utilisation de surfaces publicitaires selon les revendications 1 à 7 **caractérisé en ce que** les surfaces publicitaires sont programmées avec une annonce publicitaire permanente qui se met automatiquement en fonctionnement en l'absence de signal d'activation d'une annonce publicitaire.

9. Système d'utilisation de surfaces publicitaires selon les revendications 1 à 8 **caractérisé en ce que** le changement d'annonce publicitaire s'effectue au moyen d'une commande à distance sans fil.

10. Système d'utilisation de surfaces publicitaires selon les revendications 1 à 9 **caractérisé en ce que** dans un système d'utilisation de surfaces publicitaires organisé de manière centralisée, les unités émettrices/réceptrices mobiles qui équipent les chariots à bagages sont constituées d'unités actives pourvues d'une alimentation en énergie autonome et coopèrent avec une unité émettrice/réceptrice centrale.

11. Système d'utilisation de surfaces publicitaires selon les revendications 1 à 9 **caractérisé en ce que** dans un système d'utilisation de surfaces publicitaires organisé de manière décentralisée, chacune des unités émettrices/réceptrices stationnaires prévues à toutes les bifurcations et à tous les croisements de chemins ou de couloirs dans l'aérogare, comporte une antenne émettrice et deux antennes réceptrices disposées à une certaine distance l'une de l'autre et montées en direction opposée, et est montée sur le plafond du couloir ou chemin de sorte que chacune des antennes réceptrices est associée à l'une des directions de mouvement du chariot à bagages.
